# EUROPEAN PATENT APPLICATION

(11) **EP 4 672 366 A1**
(43) Date of publication of application: **31.12.2025**
(21) Application number: 24789006.4
(22) Date of filing: 09.04.2024
(51) Int. Cl.: H01M 4/36, H01M 4/525, H01M 4/505, H01M 4/131, H01M 10/052, H01M 4/02

(54) **POSITIVE ELECTRODE MATERIAL, AND POSITIVE ELECTRODE AND LITHIUM SECONDARY BATTERY COMPRISING SAME**

(30) Priority: 10.04.2023 KR 20230047003
(71) Applicant: LG CHEM, LTD., Seoul 07336 (KR)
(72) Inventor: JUNG, Jin Hee, Daejeon 34122 (KR); JU, Jin Wook, Daejeon 34122 (KR); KIM, Sol Jin, Daejeon 34122 (KR); KIM, Jun Seong, Daejeon 34122 (KR); WOO, Sang Won, Daejeon 34122 (KR); LYM, Jae Seung, Daejeon 34122 (KR); KIM, Jeong Won, Daejeon 34122 (KR); CHOE, Gwang Seok, Daejeon 34122 (KR)
(74) Representative: Hoffmann Eitle
(86) International application number: PCT/KR2024/004740
(87) International publication number: WO 2024/215064

(57) **Abstract**

The present invention relates to a positive electrode material, a positive electrode for a lithium secondary battery comprising same, and a lithium secondary battery comprising same, wherein the positive electrode material comprises: a first positive electrode active material in the form of a single particle; and a second positive electrode active material in the form of a secondary particle and having a larger average particle diameter (D₅₀) than that of the first positive electrode active material, wherein, when a pressure of 6,500 kgf/cm² is applied to the positive electrode material, the volume of particles with a particle diameter of 1 *µ*m or less is 10% or less of the total volume of particles present in the positive electrode material.

## Description

### TECHNICAL FIELD

### Cross-reference to Related Applications

This application claims priority from Korean Patent Application No. 10-2023-0047003, filed on April 10, 2023, the disclosure of which is incorporated by reference herein.

### Technical Field

The present invention relates to a positive electrode material for a lithium secondary battery, and a positive electrode and a lithium secondary battery which include the same.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium composite transition metal oxides have been used as a positive electrode active material of the lithium secondary battery, and, among these oxides, a lithium cobalt composite metal oxide, such as LiCoO₂, having a high operating voltage and excellent capacity characteristics has been mainly used. However, the LiCoO₂ has poor thermal properties due to an unstable crystal structure caused by delithiation. Also, since the LiCoO₂ is expensive, there is a limitation in using a large amount of the LiCoO₂ as a power source for applications such as electric vehicles.

Lithium manganese composite metal oxides (LiMnO₂ or LiMn₂O₄), lithium iron phosphate compounds (LiFePO₄, etc.), or lithium nickel composite metal oxides (LiNiO₂, etc.) have been developed as materials for replacing the LiCoO₂. Among these materials, research and development of the lithium nickel composite metal oxides, in which a large capacity battery may be easily achieved due to a high reversible capacity of about 200 mAh/g, have been more actively conducted. However, the LiNiO₂ has limitations in that the LiNiO₂ has poorer thermal stability than the LiCoO₂ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the LiNiO₂, a lithium transition metal oxide, in which a portion of nickel (Ni) is substituted with cobalt (Co), manganese (Mn), or aluminum (Al), has been developed.

With respect to a lithium ion battery using the lithium composite transition metal oxide, particularly, a lithium composite transition metal oxide containing a high content of nickel (Ni-rich) as a positive electrode active material, battery capacity, high output, and gas generation at high temperatures are not only affected by chemical properties such as a composition of the positive electrode active material, a content of impurities, and a content of lithium by-product present on a surface thereof, but are also affected by physical properties such as size, surface area, density, and shape of positive electrode active material particles.

In general, in order to maximize volumetric energy density of a battery, a method has been used in which the volumetric energy density of the battery is improved by using a mixture of a positive electrode active material having a large particle diameter and a positive electrode active material having a small particle diameter to fill voids between large-diameter positive electrode active material particles with the small-diameter positive electrode active material, and a method of rolling a positive electrode active material layer using a roll press has been used to prepare the positive electrode active material layer having a more dense structure. In this case, since excessive cracks occur in the particles having relatively weak particle strength during rolling due to a difference in particle strength between the positive electrode active material having a large particle diameter and the positive electrode active material having a small particle diameter, the particles not only lose their original shape, but a contact area with an electrolyte solution is also excessively increased, and thus, there has been a problem in that life characteristics are degraded when the positive electrode active material layer is used in the battery.

Therefore, there is a need to develop a positive electrode material which may improve volumetric energy density and may improve life characteristics by suppressing particle cracking during rolling for preparing a positive electrode.

### [Prior Art Documents]

### [Patent Document]

(Patent Document 1) Korean Patent Application Laid-open Publication No. 2021-0117212

### DISCLOSURE OF THE INVENTION

### TECHNICAL PROBLEM

An aspect of the present invention provides a positive electrode material, in which particle cracking during rolling for preparing a positive electrode is reduced, while improving volumetric energy density.

Another aspect of the present invention provides a positive electrode which includes the positive electrode material and exhibits excellent electrochemical performance by mitigating cracking of the positive electrode active material particles included.

Another aspect of the present invention provides a lithium secondary battery including the positive electrode.

### TECHNICAL SOLUTION

In order to solve the above-described tasks, the present invention provides a positive electrode material, and a positive electrode for a lithium secondary battery and a lithium secondary battery which include the positive electrode material.
(1) The present invention provides a positive electrode material which includes a first positive electrode active material in a form of a single particle; and a second positive electrode active material which is in a form of a secondary particle and has a larger average particle diameter (D₅₀) than the first positive electrode active material, wherein, when a pressure of 6,500 kgf/cm² is applied to the positive electrode material, a volume of particles having a particle diameter of 1 µm or less relative to a total volume of particles present in the positive electrode material is 10% or less.
(2) The present invention provides the positive electrode material of (1) above, wherein the positive electrode material has a bi-modal particle size distribution.
(3) The present invention provides the positive electrode material of (1) or (2) above, wherein an average particle diameter (D₅₀) of the first positive electrode active material is 50% or less based on the average particle diameter (D₅₀) of the second positive electrode active material.
(4) The present invention provides the positive electrode material of any one of (1) to (3) above, wherein the form of a single particle is single crystallinity.
(5) The present invention provides the positive electrode material of any one of (1) to (4) above, wherein a weight ratio of the first positive electrode active material to the second positive electrode active material is in a range of 1:0.1 to 1:10.
(6) The present invention provides the positive electrode material of any one of (1) to (5) above, wherein the first positive electrode active material has an average particle diameter (D₅₀) of 1 µm to 10 µm.
(7) The present invention provides the positive electrode material of any one of (1) to (6) above, wherein the second positive electrode active material has the average particle diameter (D₅₀) of 6 µm to 25 µm.
(8) The present invention provides the positive electrode material of any one of (1) to (7) above, wherein the first positive electrode active material has a composition represented by Formula 1.

[Formula 1] Li₁₊ₐ₁Niₓ₁Co_{y1}M¹_{z1}M²_{w1}O₂

In Formula 1, M¹ is at least one selected from the group consisting of manganese (Mn) and aluminum (Al), M² is at least one selected from the group consisting of boron (B), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf), and -0.1≤a1≤0.3, 0.6≤x1<1.0, 0<y1<0.4, 0<z1<0.4, and 0≤w1≤0.1.

(9) The present invention provides the positive electrode material of any one of (1) to (8) above, wherein the second positive electrode active material has a composition represented by Formula 2.

[Formula 2] Li₁₊ₐ₂Niₓ₂Co_{y2}M³_{z2}M⁴_{w2}O₂

In Formula 2, M³ is at least one selected from the group consisting of Mn and Al, M⁴ is at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf, and -0.1≤a2≤0.3, 0.6≤x2<1.0, 0<y2<0.4, 0<z2<0.4, and 0≤w2≤0.1.

(10) The present invention provides a positive electrode including a positive electrode active material layer which includes the positive electrode material of any one of (1) to (9) above.

(11) The present invention provides a lithium secondary battery including the positive electrode of (10) above.

### ADVANTAGEOUS EFFECTS

Since a positive electrode material according to the present invention includes a first positive electrode active material in a form of a single particle; and a second positive electrode active material which is in a form of a secondary particle and has a larger average particle diameter (D₅₀) than the first positive electrode active material, wherein, when a pressure of 6,500 kgf/cm² is applied to the positive electrode material, the positive electrode material satisfies that a volume of particles having a particle diameter of 1 µm or less relative to a total volume of particles present in the positive electrode material is 10% or less, the positive electrode material has an effect of reducing a particle cracking phenomenon of the positive electrode material during rolling for preparing a positive electrode. Accordingly, in a case in which the positive electrode material according to the present invention is used, the occurrence of a side reaction with an electrolyte solution caused by particle cracking of the positive electrode material may be minimized, and excellent capacity characteristics and life characteristics may be achieved.

### BRIEF DESCRIPTION OF THE DRAWINGS

FIG. 1 is a scanning electron microscope (SEM) image of a first positive electrode active material prepared in Preparation Example 2.
FIG. 2 is an SEM image of a second positive electrode active material prepared in Preparation Example 1.
FIG. 3 is an SEM image of a small-diameter secondary particle positive electrode active material prepared in Comparative Preparation Example 1.
FIG. 4 is an SEM image of a small-diameter single particle positive electrode active material prepared in Comparative Preparation Example 2.
FIG. 5 is particle size distribution curves measured by a particle size analyzer (PSA) before and after applying a pressure of 6,500 kgf/cm² to a positive electrode material prepared in Example 1.
FIG. 6 is particle size distribution curves measured by the PSA before and after applying a pressure of 6,500 kgf/cm² to a positive electrode material prepared in Example 2.
FIG. 7 is particle size distribution curves measured by the PSA before and after applying a pressure of 6,500 kgf/cm² to a positive electrode material prepared in Comparative Example 1.
FIG. 8 is particle size distribution curves measured by the PSA before and after applying a pressure of 6,500 kgf/cm² to a positive electrode material prepared in Comparative Example 2.
FIG. 9 is particle size distribution curves measured by the PSA before and after applying a pressure of 6,500 kgf/cm² to a positive electrode material prepared in Comparative Example 3.
FIG. 10 is an electron backscatter diffraction-inverse pole figure (EBSD-IPF) map of the first positive electrode active material prepared in Preparation Example 2.
FIG. 11 is data related to battery characteristics evaluation (capacity retention) of lithium secondary batteries respectively including the positive electrode materials prepared in Example 1 and Comparative Example 1.
FIG. 12 is data related to battery characteristics evaluation (volume change rate) of the lithium secondary batteries respectively including the positive electrode materials prepared in Example 1 and Comparative Example 1.

### BEST MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms 'include,' 'comprise,' or 'have' in this specification specify the presence of stated features, numbers, steps, elements, or combinations thereof, but do not preclude the presence or addition of one or more other features, numbers, steps, elements, or combinations thereof.

The expression 'primary particle' in the present invention denotes the smallest unit of particles recognized when a positive electrode active material is observed by using a scanning electron microscope (SEM), and the expression 'secondary particle' denotes a secondary structure formed by aggregation of a plurality of the primary particles.

The expression 'a form of a secondary particle' in the present invention refers to a spherical form which is formed by aggregation of tens to hundreds of primary particles prepared by a conventional method, wherein it denotes a form which is composed of more than 50 primary particles. Specifically, in the present invention, the form of a secondary particle is a form in which more than 50 primary particles are aggregated, and may be a form in which hundreds or thousands of particles are aggregated.

The expression 'a form of a single particle' in the present invention is a concept in contrast to a form of a spherical secondary particle which is formed by aggregation of tens to hundreds of primary particles that are prepared by a conventional method, wherein it means a form composed of 50 or less primary particles. Specifically, the form of a single particle in the present invention may be a single particle composed of one primary particle, or may be the form of a secondary particle in which 2 or more, and 5 or less, 10 or less, 15 or less, 20 or less, 25 or less, 30 or less, 35 or less, 40 or less, 45 or less, or 50 or less primary particles are aggregated.

The expression 'single crystal' in the present invention may be used interchangeably with the expression 'single crystallinity', and refers to a positive electrode active material or lithium composite transition metal oxide including 1 to 50 grains. Typically, a single crystal particle refers to a particle in which an entire sample is composed of only one grain or grain region. A single crystal positive electrode active material or single crystallinity positive electrode active material in the present invention may be 1 to 50 single crystal particles, specifically, a single crystal particle composed of 1 grain in the present invention, or may be one in which 2 or more, and 5 or less, 10 or less, 15 or less, 20 or less, 25 or less, 30 or less, 35 or less, 40 or less, 45 or less, or 50 or less single crystal particles are aggregated, wherein it may exhibit characteristics similar to those of one single crystal particle by including a small number of single crystal particles. The 'grain' or 'grain region' means a region in which atoms in the sample are continuously and periodically arranged in one direction. The grain may be analyzed by using an electron backscatter diffraction (EBSD) analyzer.

The expression 'average particle diameter (D₅₀)' in the present invention denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Microtrac S3500), a particle size distribution is calculated by measuring a difference in diffraction patterns due to a particle size when particles pass through a laser beam, and the D₅₀ may be measured by calculating a particle diameter at 50% of the cumulative distribution of volume according to the particle diameter using the measurement instrument.

The expression 'fine powder' in the present invention refers to particles having a particle diameter of 1 µm or less when, after dispersing pressurized measurement target powder in a dispersion medium, the dispersion medium is introduced into a commercial laser diffraction particle size measurement instrument (e.g., Microtrac S3500), and a particle size distribution is calculated by measuring a difference in diffraction patterns due to a particle size when particles pass through a laser beam.

### Positive Electrode Material

Hereinafter, a positive electrode material according to the present invention will be described.

The positive electrode material of the present invention includes a first positive electrode active material in a form of a single particle; and a second positive electrode active material which is in a form of a secondary particle and has a larger average particle diameter (D₅₀) than the first positive electrode active material, wherein, when a pressure of 6,500 kgf/cm² is applied to the positive electrode material, a volume of particles having a particle diameter of 1 µm or less relative to a total volume of particles present in the positive electrode material is 10% or less.

A high nickel-based (high Ni) positive electrode active material in the form of a secondary particle has an advantage of excellent energy density, but has a limitation in that instability of crystal structure inevitably occurs due to generation of fine powder which is caused by structural distortion and internal cracks during repeated charge and discharge processes. There is an advantage in that the higher the degree of single particle formation of the positive electrode active material is, the less the particle cracks or collapses during rolling and the lower the fine powder generation rate during rolling is, but there is a problem in that energy density is poor.

Thus, the present inventors have found that, in a case in which a positive electrode material includes a first positive electrode active material in a form of a single particle; and a second positive electrode active material which is in a form of a secondary particle and has a larger average particle diameter (D₅₀) than the first positive electrode active material, wherein, when a pressure of 6,500 kgf/cm² is applied to the positive electrode material, a volume of particles having a particle diameter of 1 µm or less relative to a total volume of particles present in the positive electrode material is 10% or less, the generation of fine powder may be reduced and rolling property of an electrode may be improved by suppressing particle collapse during rolling, and energy density characteristics may be improved, thereby leading to the completion of the present invention.

The positive electrode material according to the present invention includes a first positive electrode active material in the form of a single particle. That is, the first positive electrode active material is a single particle or in the form of a single particle in which 2 to 50 primary particles are aggregated. Specifically, the first positive electrode active material may be a single particle composed of one primary particle, or may be in a form of a secondary particle in which 2 or more, and 5 or less, or 10 or less primary particles are aggregated. The form of a single particle is distinct from a secondary particle in which more than 50 primary particles are aggregated. In a case in which the first positive electrode active material is in the form of a single particle, since stability is excellent, the positive electrode material including the first positive electrode active material does not break or crack even if the positive electrode material is rolled, and thus, a side reaction between the positive electrode material and an electrolyte solution may be reduced. As a result, since durability against volume changes during charge and discharge of the battery is improved, life characteristics may be improved. In a case in which the first positive electrode active material is in the form of a secondary particle, since the positive electrode material including the first positive electrode active material is broken or cracked, there is a problem in that the life characteristics are poor due to the side reaction between the positive electrode material and the electrolyte solution.

According to an embodiment of the present invention, the form of a single particle may be single crystallinity. Specifically, the form of a single particle may be a single particle composed of one primary particle. In this case, the form of a single particle may be a primary particle composed of one single crystal particle, or may be a primary particle composed of 2 or more, and 5 or less, or 10 or less single crystal particles. Also, the form of a single particle may be in the form of a secondary particle in which 2 or more, and 5 or less, or 10 or less primary particles are aggregated. In this case, the form of a single particle may be a form in which primary particles composed of one single crystal particle are aggregated, or may be a form in which primary particles composed of 2 or more, and 5 or less, or 10 or less single crystal particles are aggregated. In a case in which the form of a single particle is single crystallinity, since a grain interface may be reduced, the side reaction between the positive electrode material and the electrolyte solution may be reduced.

The positive electrode material according to the present invention includes a second positive electrode active material in the form of a secondary particle. That is, the second positive electrode active material is in the form of a secondary particle in which more than 50 primary particles are aggregated. The form of a secondary particle is distinct from the single particle or the form of a single particle in which 2 to 50 primary particles are aggregated. In a case in which the second positive electrode active material is in the form of a secondary particle, since pores in the positive electrode material are reduced, energy density may be improved. As a result, capacity characteristics of the battery may be improved. In a case in which the second positive electrode active material is in the form of a single particle, since the energy density of the positive electrode material including the second positive electrode active material is reduced, the capacity characteristics may be poor.

The second positive electrode active material has a larger average particle diameter (D₅₀) than the first positive electrode active material. Since the higher the degree of single particle formation of the positive electrode material is the less the particle cracks or collapses during rolling and the lower the fine powder generation rate during rolling is, excellent electrochemical performance may be obtained when a positive electrode is prepared by using the positive electrode material. Since the positive electrode material includes the first positive electrode active material, which is in the form of a single particle and has a smaller average particle diameter (D₅₀), and the second positive electrode active material which is in the form of a secondary particle and has a larger average particle diameter (D₅₀), the degree of single particle formation of the positive electrode material may be increased while the energy density is maintained. As a result, battery characteristics of a battery including the positive electrode material may be improved.

In the positive electrode material according to the present invention, when a pressure of 6,500 kgf/cm² is applied to the positive electrode material, a volume of particles having a particle diameter of 1 µm or less relative to a total volume of particles present in the positive electrode material is 10% or less. Specifically, when a pressure of 6,500 kgf/cm² is applied to the positive electrode material, the volume of the particles having a particle diameter of 1 µm or less relative to the total volume of the particles present in the positive electrode material is 10% or less, 9% or less, 8% or less, 7% or less, 6% or less, or 5% or less, and may be 0.01% or more.

The volume of the particles having a particle diameter of 1 µm or less relative to the total volume of the particles present in the positive electrode material, that is, the fine powder generation rate is a value which is determined by filling 3 g of the positive electrode material into a circular mold with a diameter of 1.3 cm, applying a pressure of 6,500 kgf/cm² with a 9 ton press, and then measuring a particle distribution of the positive electrode material to obtain a ratio of fine powder having a particle diameter of 1 µm or less therefrom. Since the fine powder having a particle diameter of 1 µm or less is not included or is included in a very small amount in the first positive electrode active material and the second positive electrode active material which are included in the positive electrode material before pressurization, an amount of the fine powder having a particle diameter of 1 µm or less included in the positive electrode material after the pressurization is measured and may be defined as the fine powder generation rate.

According to an embodiment of the present invention, the positive electrode material of the present invention includes the first positive electrode active material and the second positive electrode active material, which have different average particle diameters from each other, together, wherein it may have a bi-modal particle size distribution. In a case in which the positive electrode material has the bi-modal particle size distribution, the degree of single particle formation of the positive electrode material may be increased while the energy density is maintained. As a result, the battery characteristics of the battery including the positive electrode material may be improved.

According to an embodiment of the present invention, the first positive electrode active material is a particle having a relatively small average particle diameter (D₅₀), and the second positive electrode active material is a particle having a relatively large average particle diameter (D₅₀), wherein, specifically, the average particle diameter (D₅₀) of the first positive electrode active material may be 50% or less, may specifically be in a range of 50% or less, 10% to 50%, 10% to 45%, 10% to 42%, 12% to 50%, 12% to 45%, 12% to 42%, 15% to 50%, 15% to 45%, or 15% to 42%, and may more specifically be in a range of 20% to 40% based on the average particle diameter (D₅₀) of the second positive electrode active material. In a case in which the average particle diameter (D₅₀) of the first positive electrode active material satisfies the above range based on the average particle diameter (D₅₀) of the second positive electrode active material, particle cracking of the positive electrode material including them may be effectively reduced.

According to an embodiment of the present invention, a weight ratio of the first positive electrode active material to the second positive electrode active material may be in a range of 1:0.1 to 1:10. Specifically, the weight ratio of the first positive electrode active material to the second positive electrode active material may be in a range of 1:1 to 1:8 or 1:1 to 1:5, more specifically, 1:1 to 1:4. In a case in which the first positive electrode active material and the second positive electrode active material are included in the above weight ratio, the particle cracking of the positive electrode material including them may be effectively reduced, and an effect of improving rolling density of the positive electrode material may be obtained while the positive electrode material exhibits excellent electrochemical performance.

According to an embodiment of the present invention, the first positive electrode active material has a particle strength that is twice or more than a particle strength of the second positive electrode active material, wherein it may specifically have a particle strength that is 2 to 10 times or 2 to 8 times, more specifically, 2.2 to 6 times the particle strength of the second positive electrode active material. In a case in which the first positive electrode active material has the particle strength within the above range based on the particle strength of the second positive electrode active material, the particle cracking of the positive electrode material including them may be effectively reduced.

According to an embodiment of the present invention, since the first positive electrode active material and the second positive electrode active material satisfy the above range of particle diameter ratio and satisfy the above weight ratio while the positive electrode material includes the first positive electrode active material and the second positive electrode active material together, the particle cracking of the positive electrode material including them together may be effectively reduced, and, accordingly, excellent life characteristics may be exhibited.

According to an embodiment of the present invention, the first positive electrode active material may have an average particle diameter (D₅₀) of 1 µm to 10 µm. Specifically, the average particle diameter (D₅₀) of the first positive electrode active material may be 1 µm or more, 2 µm or more, 3 µm or more, or 4 µm or more, and may be 5 µm or less, 6 µm or less, 7 µm or less, 8 µm or less, 9 µm or less, or 10 µm or less. In a case in which the average particle diameter (D₅₀) of the first positive electrode active material is within the above range, since stability is excellent, the positive electrode material including the same does not break or crack even if the positive electrode material is rolled, and thus, the side reaction between the positive electrode material and the electrolyte solution may be reduced. As a result, since the durability against volume changes during charge and discharge of the battery is improved, the life characteristics may be improved.

According to an embodiment of the present invention, the second positive electrode active material may have an average particle diameter (D₅₀) of 6 µm to 25 µm. Specifically, the average particle diameter (D₅₀) of the second positive electrode active material may be 6 µm or more, 7 µm or more, 8 µm or more, 9 µm or more, or 10 µm or more, and may be 11 µm or less, 12 µm or less, 13 µm or less, 14 µm or less, 15 µm or less, 16 µm or less, 17 µm or less, 18 µm or less, 19 µm or less, 20 µm or less, 21 µm or less, 22 µm or less, 23 µm or less, 24 µm or less, or 25 µm or less. In a case in which the average particle diameter (D₅₀) of the second positive electrode active material is within the above range, there is an effect of improving the energy density.

In a case in which the average particle diameters (D₅₀) of the first positive electrode active material and the second positive electrode active material satisfy the above ranges, the particle cracking of the positive electrode material including them is mitigated, and, since the second positive electrode active material particles are filled between the first positive electrode active material particles, tap density of the positive electrode material including the same may be improved. Since the higher the tap density is the higher the packing density of the electrode is, a slurry containing the positive electrode material having the above tap density may be thinly applied onto a surface of a positive electrode collector when the electrode is prepared by using the positive electrode material, and thus, a thickness of the electrode after coating is improved to be thin, there is less particle cracking of the first positive electrode active material in the form of a single particle during rolling the coated positive electrode collector, and a pressure required to reach the thickness of the electrode to match the rolling density may be reduced to improve cracking of the positive electrode material due to the rolling. In addition, the capacity characteristics may be further improved as the volumetric energy density is improved due to a reduction in voids between the particles.

Since the particle strength of the positive electrode active material varies depending on a composition and characteristics of a precursor for a positive electrode active material (transition metal hydroxide, transition metal oxyhydroxide, etc.), as a raw material, and sintering conditions, a positive electrode active material having desired particle strength may be prepared by appropriately adjusting the sintering conditions (temperature and time) according to the composition and/or characteristics (surface area, density, shape, etc.) of the precursor for a positive electrode active material.

The first positive electrode active material and the second positive electrode active material may each independently include a lithium composite transition metal oxide in which a molar ratio of nickel among transition metals is 60% or more. Since the nickel-rich lithium transition metal oxide has large capacity per unit volume, excellent capacity characteristics may be achieved when it is used in a battery.

According to an embodiment of the present invention, the first positive electrode active material may have a composition represented by Formula 1 below.

[Formula 1] Li₁₊ₐ₁Niₓ₁Co_{y1}M¹_{z1}M²_{w1}O₂

In Formula 1,
M¹ is at least one selected from the group consisting of manganese (Mn) and aluminum (Al),
M² is at least one selected from the group consisting of boron (B), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf), and
-0.1≤a1≤0.3, 0.6≤x1<1.0, 0<y1<0.4, 0<z1<0.4, and 0≤w1≤0.1.
a1 represents a molar ratio of lithium in the lithium composite transition metal oxide, wherein a1 may satisfy - 0.1≤a1≤0.3, particularly 0≤a1≤0.25, and more particularly 0≤a1≤0.10.

x1 represents a molar ratio of nickel among total transition metals in the lithium composite transition metal oxide, wherein x1 may satisfy 0.6≤x1<1.0, particularly 0.6≤x1≤0.99 or 0.7≤x1≤0.99, and more particularly 0.8≤x1≤0.95. In a case in which the nickel content satisfies the above range, excellent capacity characteristics may be achieved.

y1 represents a molar ratio of cobalt among the total transition metals in the lithium composite transition metal oxide, wherein y1 may satisfy 0<y1<0.4, particularly 0<y1≤0.35, and more particularly 0.01≤y1≤0.3.

z1 represents a molar ratio of element M¹ among the total transition metals in the lithium composite transition metal oxide, wherein z1 may satisfy 0<z1≤0.4, particularly 0<z1<0.35, and more particularly 0.01≤z1≤0.30.

w1 represents a molar ratio of M² among the total transition metals, wherein w1 may satisfy 0≤w1≤0.1, particularly 0≤w1≤0.08, and more particularly 0≤w1≤0.05.

x1, y1, z1, and w1 may satisfy x1+y1+z1+w1=1.

According to an embodiment of the present invention, the second positive electrode active material may have a composition represented by Formula 2 below.

[Formula 2] Li₁₊ₐ₂Niₓ₂Co_{y2}M³_{z2}M⁴w₂O₂

In Formula 2,
M³ is at least one selected from the group consisting of Mn and Al,
M⁴ is at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf, and
-0.1≤a2≤0.3, 0.6≤x2<1.0, 0<y2<0.4, 0<z2<0.4, and 0≤w2≤0.1.

a2 represents a molar ratio of lithium in the lithium composite transition metal oxide, wherein a2 may satisfy - 0.1≤a2≤0.3, particularly 0≤a2≤0.25, and more particularly 0≤a2≤0.10.

x2 represents a molar ratio of nickel among total transition metals in the lithium composite transition metal oxide, wherein x2 may satisfy 0.6≤x2<1.0, particularly 0.6≤x2≤0.99 or 0.7≤x2≤0.99, and more particularly 0.8≤x2≤0.95. In a case in which the nickel content satisfies the above range, excellent capacity characteristics may be achieved.

y2 represents a molar ratio of cobalt among the total transition metals in the lithium composite transition metal oxide, wherein y2 may satisfy 0<y2<0.4, particularly 0<y2≤0.35, and more particularly 0.01≤y2≤0.3.

z2 represents a molar ratio of element M³ among the total transition metals in the lithium composite transition metal oxide, wherein z2 may satisfy 0<z2≤0.40, particularly 0<z2<0.35, and more particularly 0.01≤z2≤0.30.

w2 represents a molar ratio of M⁴ among the total transition metals, wherein w2 may satisfy 0≤w2≤0.1, particularly 0≤w2≤0.08, and more particularly 0≤w2≤0.05.

x2, y2, z2, and w2 may satisfy x2+y2+z2+w2=1.

Compositions of the first positive electrode active material and the second positive electrode active material may be the same or different from each other. For example, the first positive electrode active material may be a lithium composite transition metal oxide having a molar ratio of nickel among the transition metals of 88 mol% or more, and the second positive electrode active material may be a lithium composite transition metal oxide having a molar ratio of nickel among the transition metals of 86 mol% or more.

The first positive electrode active material and the second positive electrode active material may further include a coating layer including at least one element (hereinafter, referred to as a 'coating element') selected from the group consisting of cobalt (Co), Al, B, Ba, Ce, Cr, F, Mg, V, Ti, Fe, Zr, Zn, Si, Y, Nb, Ga, Sn, Mo, W, P, S, Sr, Ta, La, and Hf on a surface of the lithium transition metal oxide, if necessary. In a case in which the coating layer as described above is included, since a contact between the lithium transition metal oxide and the electrolyte solution is blocked, gas generation due to the side reaction with the electrolyte solution and dissolution of the transition metal may be effectively suppressed.

The coating layer may be formed through a method of mixing the lithium transition metal oxide and a raw material including the coating element and then heat-treating the mixture at a temperature of 200°C to 800°C.

### Positive Electrode

Also, the present invention provides a positive electrode for a lithium secondary battery which includes a positive electrode active material layer including the above positive electrode material. Specifically, the positive electrode includes a positive electrode collector and a positive electrode active material layer which is disposed on at least one surface of the positive electrode collector and includes the positive electrode material.

According to an embodiment of the present invention, the positive electrode active material layer may have a porosity of 10 vol% to 30 vol%, particularly 15 vol% to 30 vol%, and more particularly 18 vol% to 27 vol%.

According to an embodiment of the present invention, when the positive electrode active material layer has the above porosity, the positive electrode may include particles having a particle diameter of less than 1 µm in an amount of 50% or less based on a total volume of particles in the positive electrode active material layer during the measurement of particle size distribution (PSD).

The positive electrode may specifically include the particles having a particle diameter of less than 1 µm in an amount of 0.01% to 50%, 0.05% to 30%, 0.1% to 28%, 0.05% to 27.5%, 0.1% to 27.5%, 0.05% to 15%, or 0.1% to 15% based on the total volume of the positive electrode active material particles.

Since the particle cracking of the positive electrode material is mitigated, the positive electrode may include only a small amount of fine powder having a particle diameter of less than 1 µm within the above range even in a case in which the positive electrode active material layer is rolled to have porosity within the above range.

After the positive electrode active material layer including the positive electrode material is formed and then rolled to have the porosity of 10 vol% to 30 vol%, particularly 15 vol% to 30 vol%, and more particularly 18 vol% to 24 vol%, a volume of the particles having a particle diameter of less than 1 µm may be obtained by measuring a volume of particles located in the positive electrode active material layer when the positive electrode active material layer is heat-treated for 2 hours in an air atmosphere at a temperature of 500°C.

The volume of the particles having a particle diameter of less than 1 µm may be a ratio of the volumes when the total volume of the positive electrode active material particles included in the positive electrode active material layer is defined as 100%, and may specifically be obtained by measuring PSD using 'MICROTRAC S3500' by MICROTRAC MRB, 'CILAS920, France' by CILAS, or 'Mastersizer2000, USA' by MALVERN Panalytical Ltd., and then dividing an area of the particles having a particle diameter of less than 1 µm by a total area in a PSD graph.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the above-described positive electrode material according to the present invention.

The positive electrode material may be included in an amount of 80 wt% to 99 wt%, more specifically, 85 wt% to 98 wt% based on a total weight of the positive electrode active material layer. When the positive electrode material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the positive electrode material according to the present invention is used. Specifically, a composition for forming a positive electrode active material layer, which is prepared by dissolving or dispersing the above-described positive electrode material as well as optionally the binder, the conductive agent, and an additive, if necessary, in a solvent, is coated on the positive electrode collector, and the positive electrode may then be prepared by drying and rolling the coated positive electrode collector. In this case, types and amounts of the positive electrode material, the binder, and the conductive agent are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Lithium Secondary Battery

Furthermore, in the present invention, an electrochemical device including the above positive electrode may be prepared. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

The lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 parts by weight to 99 parts by weight based on 100 parts by weight of a total weight of the negative electrode active material layer.

The binder is a component that assists in the binding between the conductive agent, the active material, and the current collector, wherein the binder may typically be added in an amount of 0.1 part by weight to 10 parts by weight based on 100 parts by weight of the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 parts by weight or less, preferably, 5 parts by weight or less based on 100 parts by weight of the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 part by weight to 5 parts by weight based on 100 parts by weight of a total weight of the electrolyte.

As described above, since the lithium secondary battery including the positive electrode material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

### MODE FOR CARRYING OUT THE INVENTION

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Preparation Examples

### Preparation Example 1 - Preparation of Second Positive Electrode Active Material

NiSO₄, CoSO₄, and MnSO₄ were dissolved in water such that a molar ratio of nickel:cobalt:manganese was 88:5:7 to prepare a transition metal-containing solution with a concentration of 2 M.

A container containing the transition metal-containing solution, a container containing an additional 25 wt% NaOH solution, and a container containing a 15 wt% NH₄OH aqueous solution were respectively connected to a 200 L batch-type reactor set at 55°C.

Subsequently, after deionized water was put into the batch-type reactor, dissolved oxygen in the water was removed by purging with nitrogen gas to create a non-oxidizing atmosphere in the reactor. Thereafter, after NaOH was added, a pH in the reactor was maintained at 11.7 while the mixture was stirred at a stirring speed of 250 rpm.

Thereafter, the transition metal-containing solution was added to the reactor at a rate of 250 mL/hr, an NH₄OH aqueous solution was added at a rate of 40 mL/hr, an aqueous NaOH solution was added at a rate at which a pH of a reaction solution may be maintained at 11.7, and, after 6 hours of reaction, stirring was then stopped and a supernatant was removed to concentrate the reaction solution. This process was repeated 4 to 5 times to grow particles until an average particle diameter (D₅₀) reached about 10 µm.

The particles thus prepared were filtered with a filter press, and then dried at 130°C for 24 hours to obtain a precursor for a second positive electrode active material with a composition of Ni_{0.885}Co_{0.035}Mn_{0.080}(OH)₂.

Subsequently, LiOH ·H₂O was added such that an equivalence ratio of LiOH·H₂O to the precursor for a second positive electrode active material was 1.06, Al(OH)₃ was added, and a second positive electrode active material in the form of a secondary particle having a molar ratio of nickel: cobalt: manganese: aluminum of 86:5:7:2 and an average particle diameter (D₅₀) of about 10 µm was prepared by sintering at 640°C for 5 hours in an oxygen atmosphere and then re-sintering at 775°C for 5 hours.

### Preparation Example 2 - Preparation of First Positive Electrode Active Material

After a positive electrode active material precursor [composition: Ni_{0.885}Co_{0.035}Mn_{0.08}(OH)₂, average particle diameter (D₅₀) of 4 µm] and anhydrous LiOH, as a lithium raw material, were mixed at a molar ratio of 1:1 and primarily sintered at 850°C for 6 hours in an oxygen atmosphere to prepare a pre-sintered product, the pre-sintered product was ground, additionally mixed with anhydrous LiOH at a molar ratio of 1:0.03, and then secondarily sintered at 800°C for 10 hours in an oxygen atmosphere to prepare a first positive electrode active material in the form of a single particle having an average particle diameter (D₅₀) of 4 µm.

### Comparative Preparation Example 1 - Preparation of Small-diameter Secondary Particle Positive Electrode Active Material

A precursor for a secondary particle positive electrode active material was prepared in the same manner as in Preparation Example 1 except that, in Preparation Example 1, the concentration process was repeated 2 to 3 times to grow particles until an average particle diameter (D₅₀) was about 4 µm.

Subsequently, a small-diameter secondary particle positive electrode active material having an average particle diameter (D₅₀) of 4 µm was prepared in the same manner as Preparation Example 1 except that the above precursor for a secondary particle positive electrode active material was used.

### Comparative Preparation Example 2 - Preparation of Small-diameter Single Particle Positive Electrode Active Material

A positive electrode active material precursor [composition: Ni_{0.885}Co_{0.035}Mn_{0.08}(OH)₂, average particle diameter (D₅₀) of 4 µm] and anhydrous LiOH, as a lithium raw material, were mixed at a molar ratio of 1:1.03 and primarily sintered at 850°C for 16 hours in an oxygen atmosphere to prepare a small-diameter single particle positive electrode active material in the form of a single particle having an average particle diameter (D₅₀) of 4 µm.

### Examples and Comparative Examples

### Example 1

A positive electrode material was prepared by mixing the first positive electrode active material prepared in Preparation Example 2 and the second positive electrode active material prepared in Preparation Example 1 at a weight ratio of 1:4.

### Example 2

A positive electrode material was prepared by mixing the first positive electrode active material prepared in Preparation Example 2 and the second positive electrode active material prepared in Preparation Example 1 at a weight ratio of 1:1.

### Comparative Example 1

A positive electrode material was prepared by mixing the small-diameter secondary particle positive electrode active material prepared in Comparative Preparation Example 1 and the second positive electrode active material prepared in Preparation Example 1 at a weight ratio of 1:4.

### Comparative Example 2

A positive electrode material was prepared by mixing the small-diameter secondary particle positive electrode active material prepared in Comparative Preparation Example 1 and the second positive electrode active material prepared in Preparation Example 1 at a weight ratio of 1:1.

### Comparative Example 3

A positive electrode material was prepared by mixing the small-diameter single particle positive electrode active material prepared in Comparative Preparation Example 2 and the second positive electrode active material prepared in Preparation Example 1 at a weight ratio of 1:4.

### Experimental Example 1

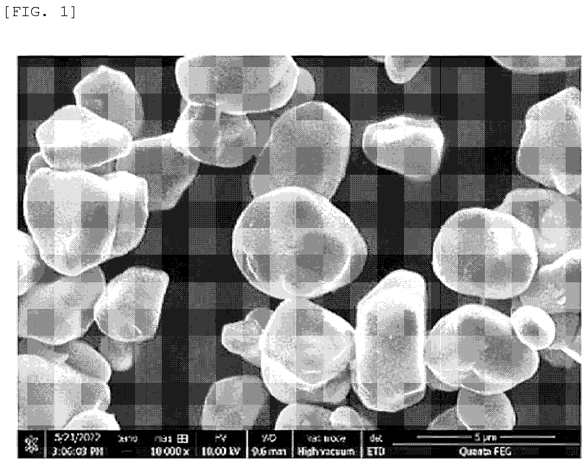

For each of the positive electrode active materials prepared in Preparation Example 2, Comparative Preparation Example 1, and Comparative Preparation Example 2, SEM images were obtained using a scanning electron microscope (SEM) (FEI Company, Quanta), and presented in FIGS. 1 to 4.

FIG. 1 is the SEM image of the first positive electrode active material prepared in Preparation Example 2.

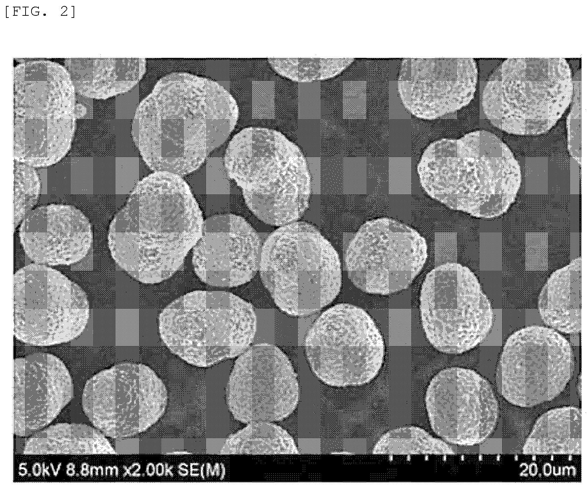

FIG. 2 is the SEM image of the second positive electrode active material prepared in Preparation Example 1.

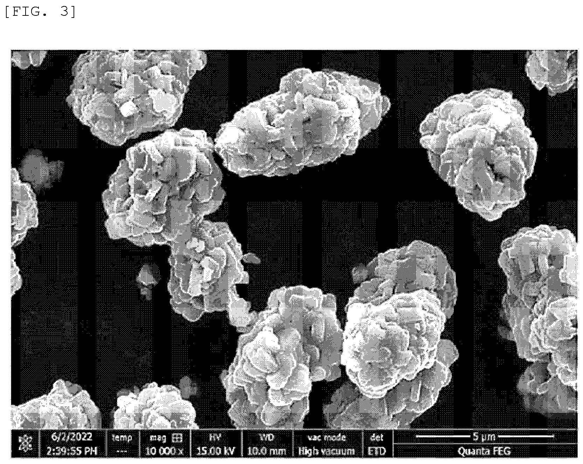

FIG. 3 is the SEM image of the small-diameter secondary particle positive electrode active material prepared in Comparative Preparation Example 1.

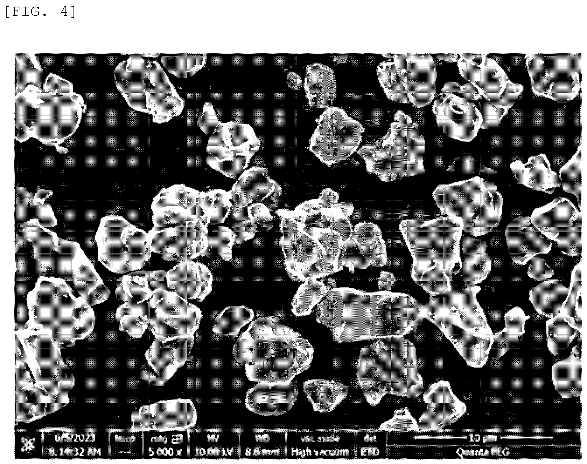

FIG. 4 is the SEM image of the small-diameter single particle positive electrode active material prepared in Comparative Preparation Example 2.

According to FIG. 1, it was confirmed that the first positive electrode active material was in the form of a single particle.

Specifically, it was confirmed that the first positive electrode active material was in the form of a secondary particle in which 1 to 10, more specifically, 1 to 5 primary particles were aggregated.

According to FIG. 2, it was confirmed that the second positive electrode active material was in the form of a secondary particle in which more than 50 primary particles were aggregated.

### Experimental Example 2

Using a particle size analyzer (PSA) (MICROTRAC S3500 by MICROTRAC MRB), particle size distributions of each of the positive electrode materials prepared in the examples and the comparative examples before and after pressurization were measured.

Specifically, the particle size distribution before pressurization was measured by uniformly mixing 50 mg of each of the positive electrode materials prepared in the examples and the comparative examples with 40 ml of distilled water and 500 µL of a dispersant and injecting the mixture into the PSA.

After 3 g of each of the positive electrode materials prepared in the examples and the comparative examples was put into a circular mold with a diameter of 1.3 cm and the positive electrode material put into the mold was pressurized at a pressure of 6,500 kgf/cm² with a 9 ton press, the pressurized positive electrode material was disintegrated with a mortar and, using the PSA (MICROTRAC S3500 by MICROTRAC MRB), the particle size distribution after pressurization was then measured by uniformly mixing 50 mg of each of the disintegrated positive electrode materials with 40 ml of distilled water and 500 µL of a dispersant and injecting the mixture into the PSA.

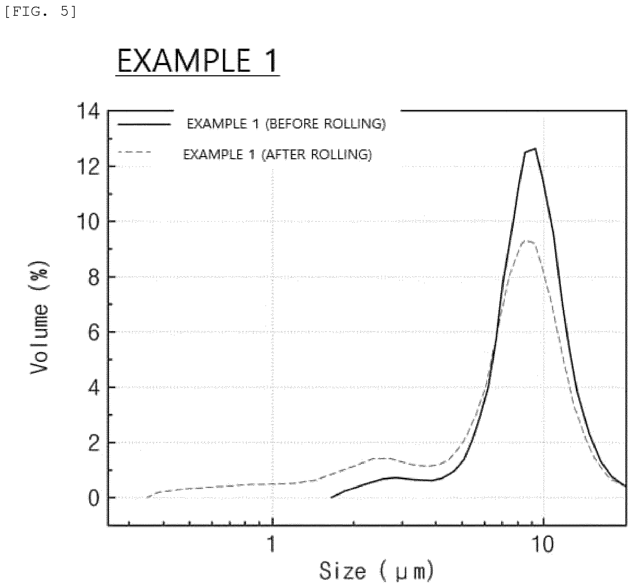

Particle size distribution curves, which were measured by the PSA before and after applying a pressure of 6,500 kgf/cm² to each of the positive electrode materials prepared in the examples and the comparative examples, are presented in FIGS. 5 to 9 below, and, using the particle size distribution curve measured by the PSA, a volume of particles having a particle diameter of 1 µm or less relative to a total volume of particles present in the positive electrode material after the pressurization (fine powder generation rate (%)) was measured and presented in Table 1 below.

FIG. 5 is the particle size distribution curves measured by the PSA before and after applying a pressure of 6,500 kgf/cm² to the positive electrode material prepared in Example 1.

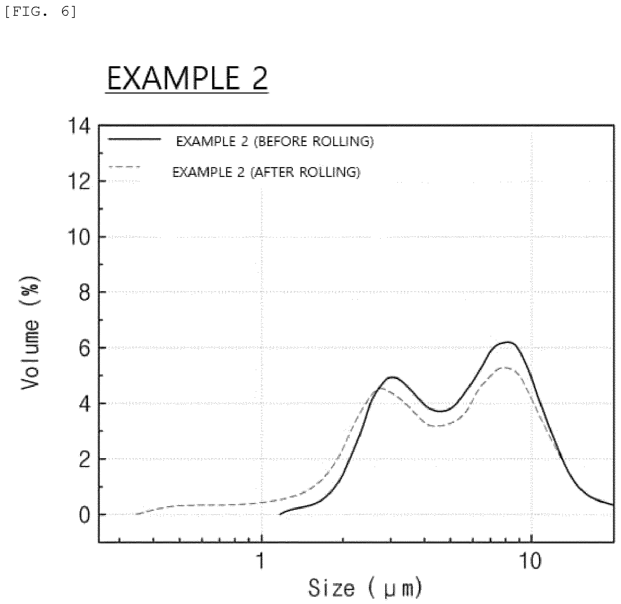

FIG. 6 is the particle size distribution curves measured by the PSA before and after applying a pressure of 6,500 kgf/cm² to the positive electrode material prepared in Example 2.

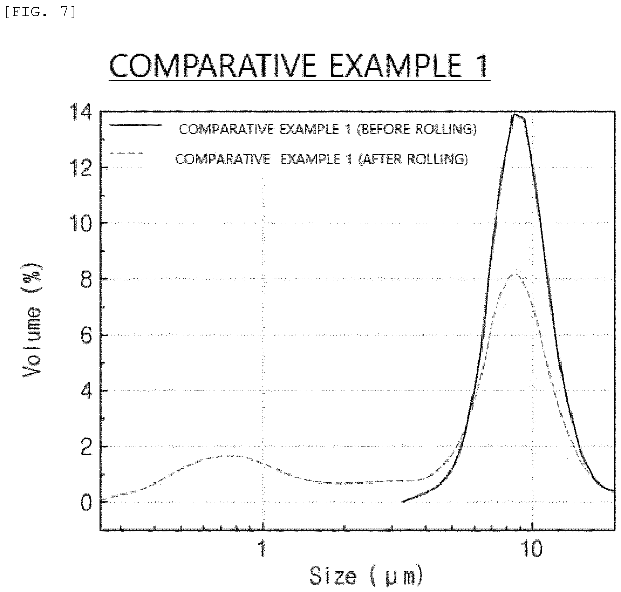

FIG. 7 is the particle size distribution curves measured by the PSA before and after applying a pressure of 6,500 kgf/cm² to the positive electrode material prepared in Comparative Example 1.

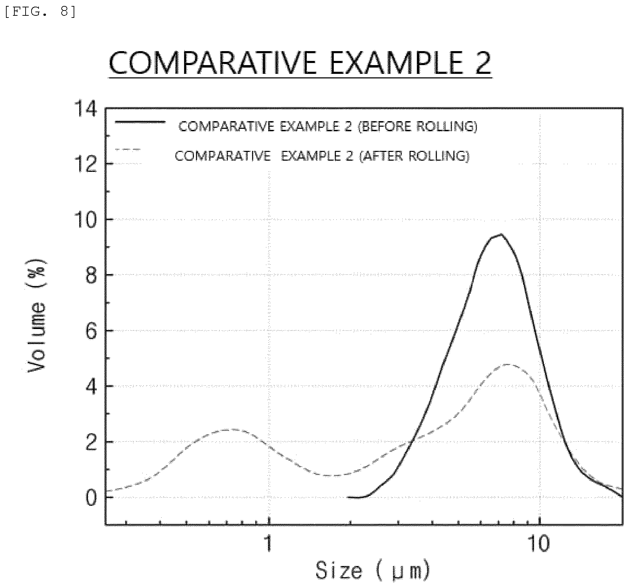

FIG. 8 is the particle size distribution curves measured by the PSA before and after applying a pressure of 6,500 kgf/cm² to the positive electrode material prepared in Comparative Example 2.

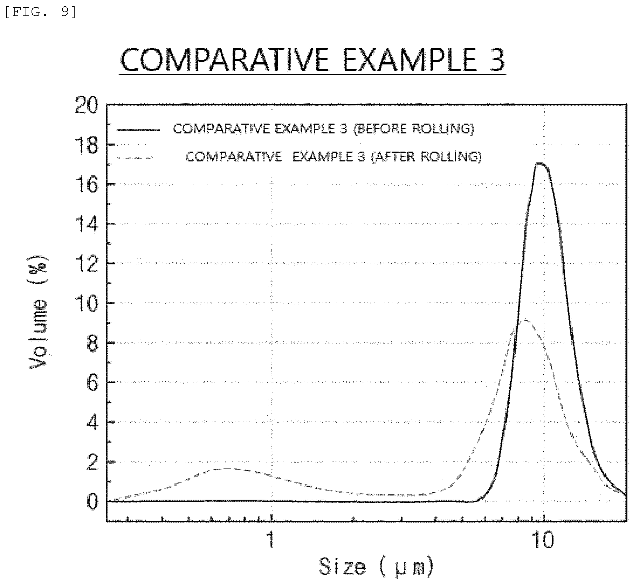

FIG. 9 is the particle size distribution curves measured by the PSA before and after applying a pressure of 6,500 kgf/cm² to the positive electrode material prepared in Comparative Example 3.

According to FIGS. 5 and 7, the positive electrode materials of Example 1 and Comparative Example 1 included two types of positive electrode active materials in the same mixing ratio and each of the two types of positive electrode active materials had the same particle diameter, but it was confirmed that Example 1 had a significantly smaller change in particle diameter after pressurization than Comparative Example 1.

According to FIGS. 6 and 8, the positive electrode materials of Example 2 and Comparative Example 2 also included two types of positive electrode active materials in the same mixing ratio and each of the two types of positive electrode active materials had the same particle diameter, but it was confirmed that Example 2 had a significantly smaller change in particle diameter after pressurization than Comparative Example 2.

According to FIGS. 5 and 9, although the positive electrode materials of Example 1 and Comparative Example 3 differed only in the preparation method of the first positive electrode active material, specifically, the sintering, it was confirmed that Example 1 had a significantly smaller change in particle diameter after pressurization than Comparative Example 3.

**[Table 1]**

| | Example 1 | Example 2 | Comparative Example 1 | Comparative Example 2 | Comparative Example 3 |
|---|---|---|---|---|---|
| Fine powder generation rate (%) | 4.6 | 3.7 | 16.9 | 25.2 | 16.33 |

According to Table 1, it was confirmed that the positive electrode materials prepared in Examples 1 and 2 had a fine powder generation rate, that is, a volume of particles with a particle diameter of 1 µm or less relative to a total volume of particles present in the positive electrode material when a pressure of 6,500 kgf/cm² was applied to the positive electrode material, of 10% or less.

In contrast, it was confirmed that the positive electrode materials prepared in Comparative Examples 1 to 3 had a fine powder generation rate of greater than 10%.

### Experimental Example 3

A cross-sectional sample was prepared by argon (Ar) ion milling the first positive electrode active material prepared in Preparation Example 2 for 2 hours using an ion milling system (JBOL, IB19520CCP) (accelerating voltage: 6 kV).

The cross-sectional sample of the first positive electrode active material was measured and analyzed using a field emission scanning electron microscope (SEM, JEOL JSM-7900F w/Oxford symmetry EBSD detector) (accelerating voltage: 20 kV). An electron backscatter diffraction (EBSD) inverse pole figure (IPF) map was created using AztecCrystal by OXFORD Instruments as an image processing-EBSD quantification analysis software.

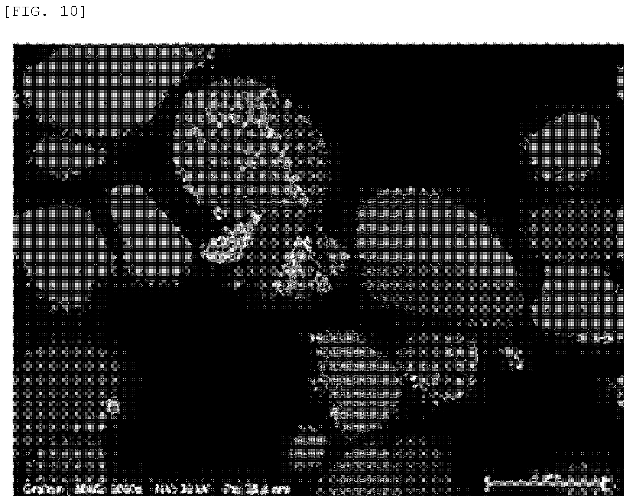

FIG. 10 is the EBSD-IPF map of the first positive electrode active material prepared in Preparation Example 2.

According to FIG. 10, it was confirmed that the first positive electrode active material of Preparation Example 2 had single crystallinity. Specifically, it was confirmed that the first positive electrode active material was composed of one primary particle including 1 to 10, more specifically, 1 to 5 single crystal particles, or was in a form in which the above primary particles were aggregated.

### Experimental Example 4

### - Preparation of Coin Type Half-cell

97.5 wt% of each of the positive electrode materials prepared in Example 1 and Comparative Example 1, 1.0 wt% of carbon black as a conductive agent, and 1.5 wt% of polyvinylidene fluoride (PVDF) (specifically, 1.4 wt% of KF9709 and 0.1 wt% of BM740H), as a binder, were mixed in an N-methylpyrrolidone (NMP) solvent to prepare a positive electrode slurry. One surface of an aluminum current collector was coated with the positive electrode slurry, dried at 130°C, and then rolled to have a porosity of 24% to prepare a positive electrode.

A lithium metal electrode was used as a negative electrode, and an electrode assembly was prepared by disposing a porous polyethylene separator between the positive electrode and the negative electrode. The electrode assembly was disposed in a battery case and an electrolyte solution, in which 1.0 M LiPF₆ was dissolved in an organic solvent in which ethylene carbonate(EC) :ethyl methyl carbonate (EMC) :diethyl carbonate (DEC) were mixed in a volume ratio of 3:3:4, was injected to prepare a coin type half-cell.

### - Battery Characteristics Evaluation

The coin type half-cell was charged (0.1 C, cut-off current: 0.05 C) to 4.25 V in a constant current-constant voltage (CC-CV) mode at 25°C, and then discharged (0.1 C) to 3.0 V in a CC mode to measure charge and discharge capacities (mAh/g) in this case. A percentage (efficiency (%)) of the discharge capacity relative to the charge capacity was calculated, and the measured charge and discharge capacities (mAh/g) and the results thereof are presented in Table 2 below.

**[Table 2]**

| Category | @25°C, 0.1C/0.1C | | |
|---|---|---|---|
| | Charge capacity (mAh/g) | Discharge capacity (mAh/g) | Efficiency (%) |
| Example 1 | 229.2 | 209.4 | 91.4 |
| Comparative Example 1 | 230.7 | 207.7 | 90 |

According to Table 2, it was confirmed that the secondary battery using the positive electrode material according to the present invention had excellent discharge capacity and efficiency at room temperature.

### Experimental Example 5

### - Preparation of Pouch Type Monocell Battery

97.5 wt% of each of the positive electrode materials prepared in Example 1 and Comparative Example 1, 1.0 wt% of carbon black as a conductive agent, and 1.5 wt% of polyvinylidene fluoride (PVDF) (specifically, 1.4 wt% of KF9709 and 0.1 wt% of BM740H), as a binder, were mixed in an N-methylpyrrolidone (NMP) solvent to prepare a positive electrode slurry. One surface of an aluminum current collector was coated with the positive electrode slurry, dried at 130°C, and then rolled to have a porosity of 24% to prepare a positive electrode.

A negative electrode active material in which natural graphite and artificial graphite were mixed in a weight ratio of 5:5, a Super C conductive agent, an additive (Daicel Corporation, DAICEL2200), and a binder (ZEON CORPORATION, BML302) were mixed in a weight ratio of 95.6:1.0:2.3:1.1 in water to prepare a negative electrode slurry. One surface of a copper current collector was coated with the negative electrode slurry, dried at 130°C, and then rolled to prepare a negative electrode.

An electrode assembly was prepared by disposing a porous polyethylene separator between the positive electrode and the negative electrode. The electrode assembly was disposed in a battery case and an electrolyte solution, in which 1.0 M LiPF₆ was dissolved in an organic solvent in which ethylene carbonate(EC):ethyl methyl carbonate(EMC):diethyl carbonate(DEC) were mixed in a volume ratio of 3:3:4, was injected to prepare a pouch type monocell.

### - Battery Characteristics Evaluation 1

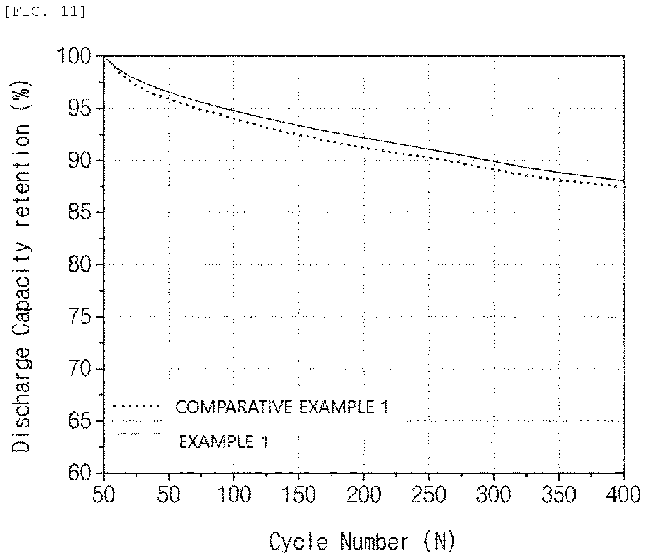

Using the pouch type monocell prepared as described above, a cycle of charging (0.33 C) the pouch type monocell to 4.25 V in a CC-CV mode and discharging (0.33 C) the pouch type monocell to 3.0 V in a CC mode at 45°C was set as one cycle, a total of 400 cycles of the charging and discharging were repeated, and, after measuring discharge capacities in a first cycle, a 100^{th} cycle, and a 400^{th} cycle, a percentage (capacity retention₁₀₀ (%)) of the discharge capacity in the 100^{th} cycle to the discharge capacity in the 1^{st} cycle and a percentage (capacity retention₄₀₀ (%)) of the discharge capacity in the 400^{th} cycle to the discharge capacity in the 1^{st} cycle are presented in Table 3 and FIG. 11 below.

FIG. 11 is data related to battery characteristics evaluation (capacity retention) of the lithium secondary batteries respectively including the positive electrode materials prepared in Example 1 and Comparative Example 1.

**[Table 3]**

| | Capacity retention₁₀₀ (%) | Capacity retention₄₀₀ (%) |
|---|---|---|
| Example 1 | 94.71 | 87.93 |
| Comparative Example 1 | 94.21 | 87.37 |

According to Table 3, it was confirmed that the secondary battery using the positive electrode material according to the present invention had excellent life characteristics.

### - Battery Characteristics Evaluation 2

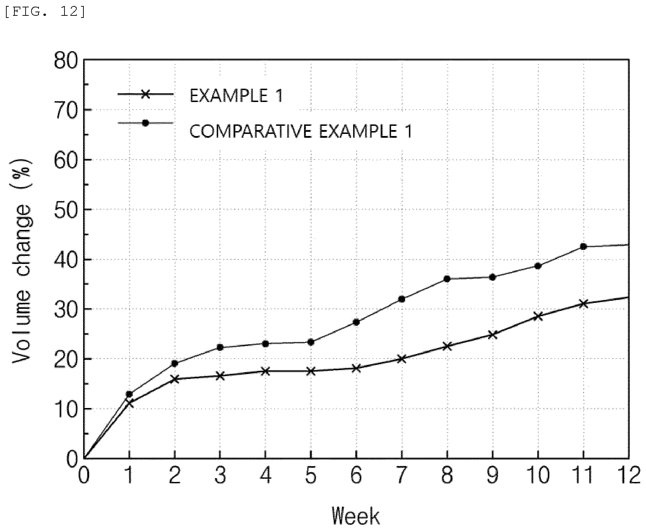

After the pouch type monocell prepared as described above was charged (0.33 C) to 4.25 V in a CC-CV mode at 25°C, the positive electrode was separated. The separated positive electrodes were put in a cell pouch, the electrolyte solution was additionally injected, and the cell pouch was then sealed to prepare a sample. A degree of volume change was measured while the sample was stored at 60°C for 12 weeks, and a percentage (volume change rate (%)) of a volume of the sample at week 12 relative to a volume of the sample at week 0 is presented in Table 4 and FIG. 12 below.

FIG. 12 is data related to battery characteristics evaluation (volume change rate) of the lithium secondary batteries respectively including the positive electrode materials prepared in Example 1 and Comparative Example 1.

**[Table 4]**

| | Volume change rate (%) |
|---|---|
| Example 1 | 32.1 |
| Comparative Example 1 | 42.7 |

According to Table 4, it was confirmed that the secondary battery using the positive electrode material according to the present invention had an excellent effect of reducing gas generation.

## Claims

1. A positive electrode material comprising:
a first positive electrode active material in a form of a single particle; and
a second positive electrode active material which is in a form of a secondary particle and has a larger average particle diameter (D₅₀) than the first positive electrode active material,
wherein, when a pressure of 6,500 kgf/cm² is applied to the positive electrode material, a volume of particles having a particle diameter of 1 µm or less relative to a total volume of particles present in the positive electrode material is 10% or less.

2. The positive electrode material of claim 1, wherein the positive electrode material has a bi-modal particle size distribution.

3. The positive electrode material of claim 1, wherein an average particle diameter (D₅₀) of the first positive electrode active material is 50% or less based on the average particle diameter (D₅₀) of the second positive electrode active material.

4. The positive electrode material of claim 1, wherein the form of a single particle is single crystallinity.

5. The positive electrode material of claim 1, wherein a weight ratio of the first positive electrode active material to the second positive electrode active material is in a range of 1:0.1 to 1:10.

6. The positive electrode material of claim 1, wherein the first positive electrode active material has an average particle diameter (D₅₀) of 1 µm to 10 µm.

7. The positive electrode material of claim 1, wherein the second positive electrode active material has the average particle diameter (D₅₀) of 6 µm to 25 µm.

8. The positive electrode material of claim 1, wherein the first positive electrode active material has a composition represented by Formula 1:
[Formula 1] Li₁₊ₐ₁Niₓ₁Co_{y1}M¹_{z1}M²_{w1}O₂
wherein, in Formula 1,
M¹ is at least one selected from the group consisting of manganese (Mn) and aluminum (Al),
M² is at least one selected from the group consisting of boron (B), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf), and
-0.1≤a1≤0.3, 0.6≤x1<1.0, 0<y1<0.4, 0<z1<0.4, and 0≤w1≤0.1.

9. The positive electrode material of claim 1, wherein the second positive electrode active material has a composition represented by Formula 2:
[Formula 2] Li₁₊ₐ₂Niₓ₂Co_{y2}M³_{z2}M⁴_{w2}O₂
wherein, in Formula 2,
M³ is at least one selected from the group consisting of Mn and Al,
M⁴ is at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf, and
-0.1≤a2≤0.3, 0.6≤x2<1.0, 0<y2<0.4, 0<z2<0.4, and 0≤w2≤0.1.

10. A positive electrode comprising a positive electrode active material layer which includes the positive electrode material of any one of claims 1 to 9.

11. A lithium secondary battery comprising the positive electrode of claim 10.
